# EUROPEAN PATENT SPECIFICATION

(11) **EP 1 026 953 B1**
(45) Date of publication and mention of the grant of the patent: **14.05.2003**
(21) Application number: 98955171.8
(22) Date of filing: 28.10.1998
(51) Int. Cl.: A22C 11/02

(54) **METHOD AND MEANS FOR MAKING COEXTRUDED SAUSAGE STRANDS**
VERFAHREN UND VORRICHTUNG ZUM HERSTELLEN VON COEXTRUDIERTEN WURSTPRODUKTEN
PROCEDES ET MOYENS DE FABRICATION DE TRONCONS DE SAUCISSE CO-EXTRUDES

(30) Priority: 30.10.1997 US 960983; 31.10.1997 US 961799
(43) Date of publication of application: 16.08.2000
(73) Proprietor: TOWNSEND ENGINEERING COMPANY, Des Moines, IA 50317 (US)
(72) Inventor: KOBUSSEN, Jos, Des Moines, IA 50317 (US); KOBUSSEN, Jaap, Des Moines, IA 50317 (US); KOBUSSEN, Mart, Des Moines, IA 50317 (US); BASILE, Vincent, Louis, III, Des Moines, IA 50317 (US)
(74) Representative: Gilmour, David Cedric Franklyn
(86) International application number: US9822846
(87) International publication number: WO99022600

(56) References cited:
- EP-A- 0 024 790
- EP-A- 0 184 930
- EP-A- 0 202 143
- EP-A- 0 300 587
- EP-A- 0 720 816
- EP-A- 0 741 973
- FR-A- 444 873
- FR-A- 2 221 081
- US-A- 3 399 423
- US-A- 3 752 618
- US-A- 4 501 542

## Description

### BACKGROUND OF THE INVENTION

In the manufacture of sausage strands, the smearing of fat particles on the surface of the sausage is a significant problem in that it substantially detracts from the appearance of the finished product. This is true in conventional sausage making, as well as in coextrusion for making sausage which have been more recently developed. Maintaining the shape of the resulting sausages during cooking has also been difficult.

A sausage extruding machine is generally disclosed in U.S. Patent No. 3,399,423. That patent teaches an apparatus which delivers sausage under pressure through a tube. A coating material is applied to the sausage after it passes through the tube. That patent also teaches applying collagen coating to a sausage product. However, sausage produced by this apparatus does not sufficiently retain its shape during cooking, and its appearance is often undesirable.

Therefore, an object of this invention is to provide a method and means for coextruding a sausage strand wherein the shape of the sausage strand will be maintained while the finished product is being handled and is being cooked.

A further object of this invention is to provide a method and means for manufacturing coextruded sausage strands wherein the problem of smearing is essentially eliminated, and where a good appearance of the finished product is achieved wherein substantial portions of lean meat are visible, and encasing said strands in an elongated casing.

These and other objects will be apparent to those skilled in the art.

### SUMMARY OF THE INVENTION

This invention involves a machine that has at least three concentrically located tubes which are spaced apart to provide at least three elongated passageways. Meat is pumped under pressure into the center and intermediate passageway with the center passageway being restricted in diameter so that meat emulsion entering therein, under a pressure of approximately 20-60 psi (1,4-4,1 bar), will have a pressure of approximately 50-200 psi (3,4-13,8 bar) as the meat emulsion is passing therethrough.

A second layer of meat emulsion moves through the intermediate passageway and is under a typical pump pressure of 20-80 psi (1,4-5,5 bar). The meat emulsion therein is moved through a restricted channel as it is being extruded to provide a thin layer on the meat emulsion passing through the center passageway. This function compresses the meat particles and places them on the outer surface of the meat emulsion passing from the center passageway. The meat particles are very visible on the outer surface of the meat emulsion strand extruded from the center passageway. Further, the decompression action as the meat emulsion moves out of the center passageway causes the salt soluble proteins to move to the outer layer of the center core of the product to enhance the cohesion of the finished product and to retain its shape during cooking.

An additional passageway is formed concentrically by the outer tube with respect to the center passageway and the first passageway. A thin collagen material is extruded from this second passageway onto the surface of the product described above. This collagen emulsion is then subsequently hardened to provide stiffness and strength to the ultimate product.

In an alternate form of the invention, meat emulsion is extruded from two passageways in the same manner, and deposited in an elongated casing comprised of cellulose, collagen, or natural casings.

The method of the invention contemplates imposing a higher pressure on the center core of the ultimate product through the restrictor tube in the machine; thence compressing the outer meat layer existing at a lower pressure, to compress the meat particles therein to make the meat particles more visible in the final product, thus avoiding smearing of the fat particles. Movement of the high pressure emulsion to a lower pressure causes the salt soluble proteins in the outer layer to enhance the cohesion of the final product to insure that it retains its shape.

### BRIEF DESCRIPTION OF THE DRAWINGS

Fig. 1 is a sectional view of the extrusion attachment of this invention as viewed from one side thereof;
Fig. 2 is a top plan view of the device of Fig. 1;
Fig. 3 is an exploded perspective view of the device of Fig. 1;
Fig. 4 is a perspective view of the components of Fig. 3 in assembled condition;
Fig. 5 is a partial perspective view of the extrusion attachment with the outer sleeve or tube removed;
Fig. 6 is a view similar to Fig. 5 but shows the outer sleeve in an assembled condition;
Fig. 7 is a sectional view taken on line 7-7 of Fig. 1;
Fig. 8 is a sectional view taken on line 8-8 of Fig. 1;
Fig. 9 is a schematic view showing the pump connections to the extrusion attachment;
Fig. 10 is a sectional view through the finished strand of this invention;
Fig. 11 is an enlargement of the right-hand end of Fig. 1;
Fig. 12 is a partial longitudinal sectional view of an alternate form of extrusion attachment of this invention as viewed from one side thereof;
Fig. 13 is a schematic view of the device of Fig. 12 showing the pump connections thereof; and
Fig. 14 is an enlarged scale sectional view of the discharge end of the attachment shown in Fig. 12 and 13.

### DESCRIPTION OF THE PREFERRED EMBODIMENT

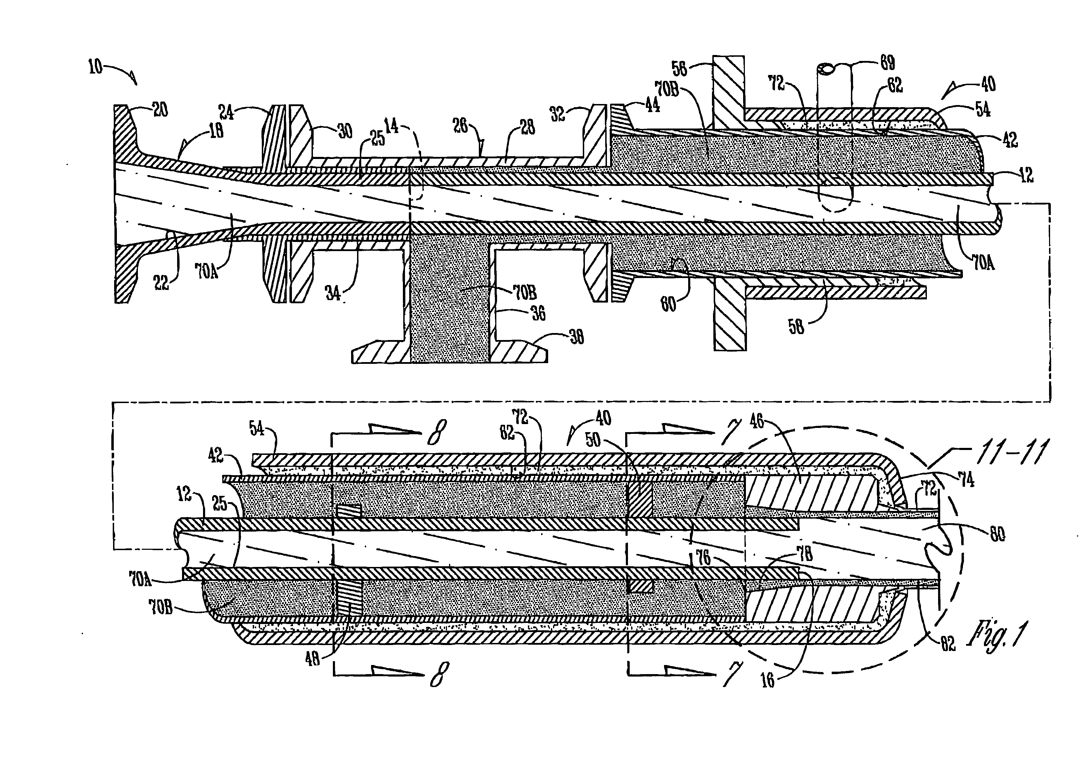

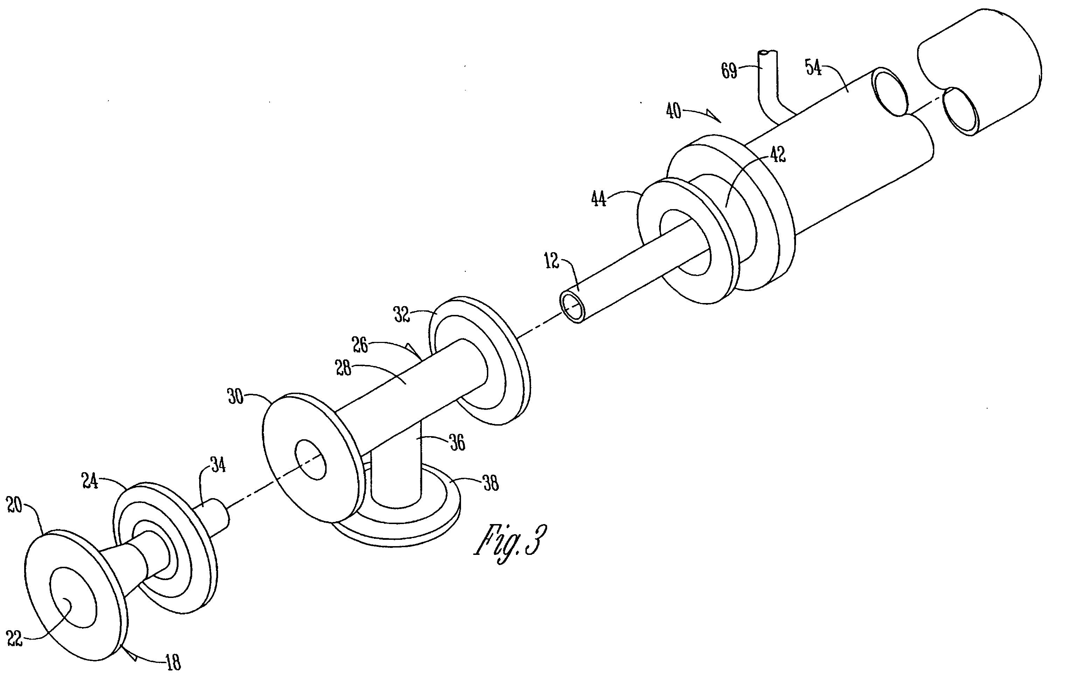

The extrusion attachment 10 (Fig. 1) has an elongated restrictor tube 12 which has an intake end 14 and a discharge end 16. An inlet coupling 18 (Fig. 1) has an internally threadable flange 20 on its outer end which is adapted to be connected to a meat emulsion pump as will be discussed hereafter. Coupling 18 has a center tapered bore 22 with a large outer diameter and a narrower inner diameter. A second threaded flange 24, similar to flange 20, is secured to coupling 18 at its inner end as best shown in Figs. 1 and 3. A hollow tube 25 extends through flange 24 from the inner end of bore 22 (Fig. 3), and abuts end 14 of tube 12.

A coupling 26 has a horizontal hollow sleeve 28 with threaded flanges 30 and 32 secured to opposite ends thereof. Flanges 30 and 32 are similar to flanges 20 and 24 described above. As shown in Fig. 1, flange 30 is adapted for threadable connection to flange 24. As also shown in Fig. 1, the tube 34 on flange 24 extends through suitable apertures in the flanges 24, 30 and in sleeve 28. (The connecting flanges herein are conventional, and the threads on the flanges have not been shown.) A vertical inlet port 36 is in communication with the interior of sleeve 28 and has a threaded flange 38 on the lower end thereof. The flange 38 is adapted for connection to a meat pump as will be described hereafter and is adapted to introduce meat emulsion into the sleeve 28 around the restrictor tube 12 and downstream of the inner end of tube 34.

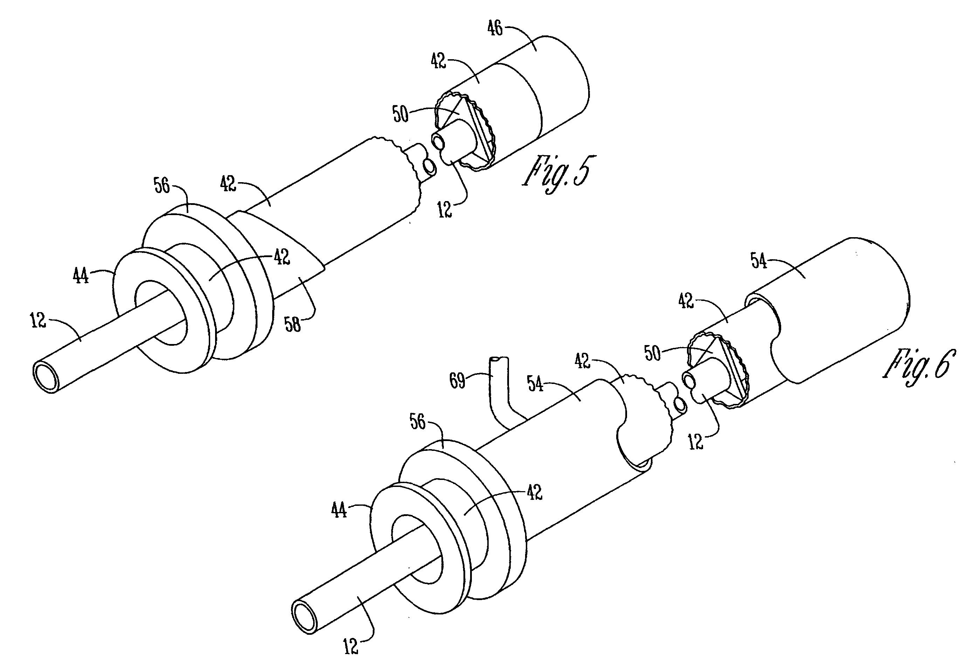

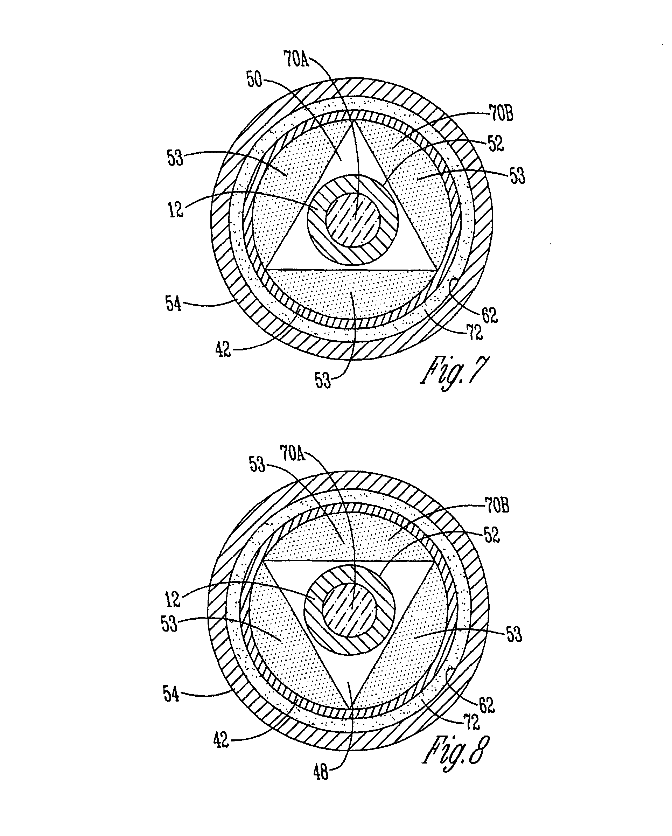

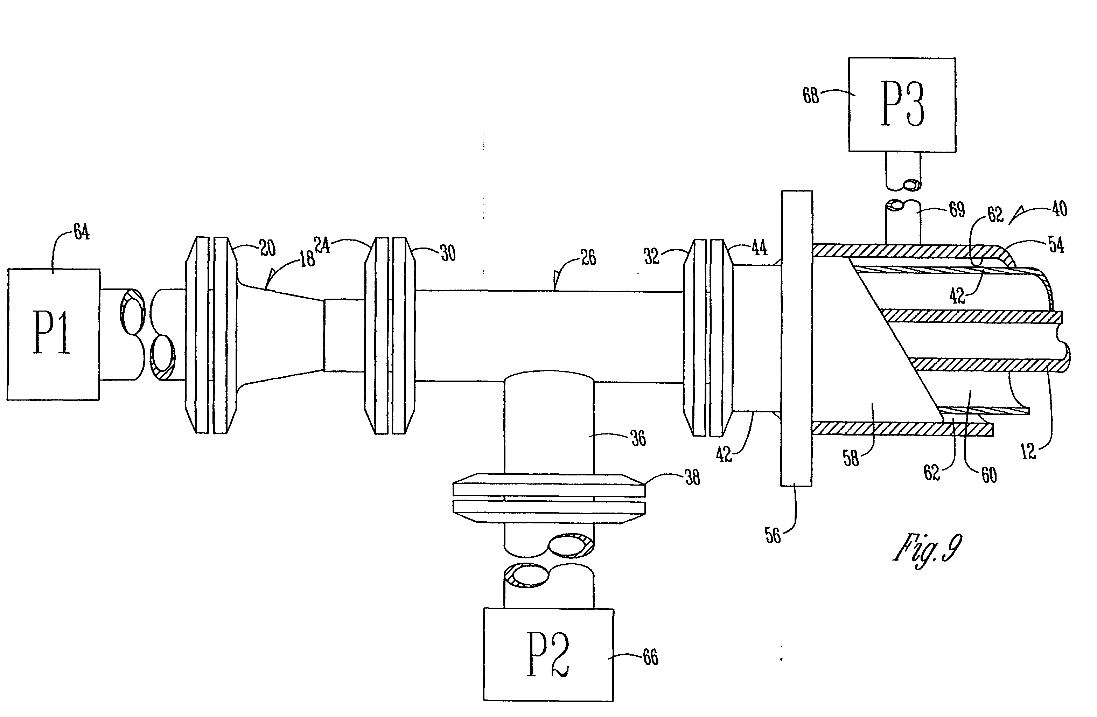

An extruder body 40 (Figs. 3 and 6) includes an elongated hollow tube 42 (Fig. 1) which has a threaded flange 44 on one end adapted to be connected to the flange 32 on coupling 26. An outlet port coupling 46 is located on the end of tube 42 opposite to the flange 44 (Fig. 1). Triangular shaped stabilizers 48 and 50 (Figs. 1, 7 and 8) are mounted around the outer diameter of restrictor tube 12 with the points of the stabilizers bearing against the internal diameter of tube 42. Each of the stabilizers 48 and 50 has a center opening 52 to receive the restrictor tube 12. Meat emulsion, as discussed hereafter, can pass by the stabilizers 48 and 50 within tube 42 by virtue of the spaces 53 shown in Figs. 7 and 8.

An outer tube 54 is secured to mounting collar 56 which has a suitable aperture therein to receive the outer surface of tube 42. Collar 56 is located on the end of tube 42 adjacent the flange 44. A spacer sleeve 58 has one end abutted against collar 56 and the other end terminating in an angular edge. The outer tube 54 fits over the outer surface of spacer sleeve 58 and is secured thereto.

A first passageway 60 exists between the outer surface of restrictor 12 and the inner surface of tube 42 (Fig. 1). A second space or passageway 62 exists between the inner surface of tube 54 and the outer surface of tube 42. The radial thickness of passageway 62 is defined by the thickness of the spacer sleeve 58.

With reference to Fig. 9, a meat emulsion pump 64 is conventionally connected to inlet coupling 18. Similarly, a meat emulsion pump 66 is conventionally connected to the flange 38 of inlet port 36. Lastly, collagen pump 68 is operatively connected to passageway 62 through tube 69.

In operation, meat emulsion 70A enters coupling 18 under conventional pump pressure of approximately 60 psi. However, as this meat emulsion 70A enters the elongated restrictor tube 12 through coupling 18, the internal pressure thereof rises to approximately 200 psi (13,8 bar). Meat emulsion 70B enters port 36 at a conventional pressure of approximately 60 psi (4,1 bar) and remains at this pressure throughout its longitudinal movement through passageway 60. The meat emulsion 70A and 70B can be of the identical composition, or can be of a different composition or different material.

A collagen material 72 moves through the second passageway 62 where it is diverted by flanges 74 on the downstream end of tube 54 (Fig. 1).

Meat emulsion from a single pump 64 can be pumped into both of the first and second passageways rather than being pumped from separate pumps 64 and 66.

It should be noted that the outlet port 46 has a shearing edge 76 just adjacent the tapered channel 78 (Fig. 1). As the meat emulsion 70B moves through passageway 60, it encounters shearing edge 76 and then moves into the tapered channel 78. The meat particles in meat emulsion 70B are compressed from spherical shaped particles to flattened elliptical particles which serves the purpose of making them more visible on the surface of the inner strand 80 that is extruded from the end of restrictor tube 12 (Fig. 1). The meat emulsion 70B leaves channel 78 and forms a layer 82 of meat emulsion 70B on the strand 80.

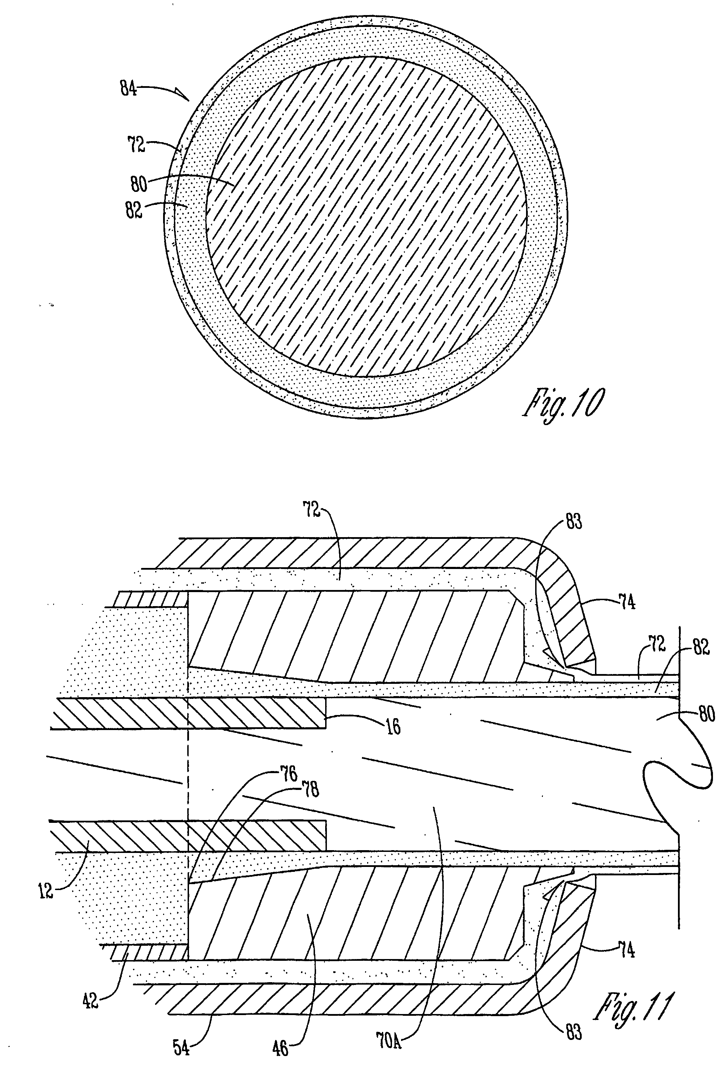

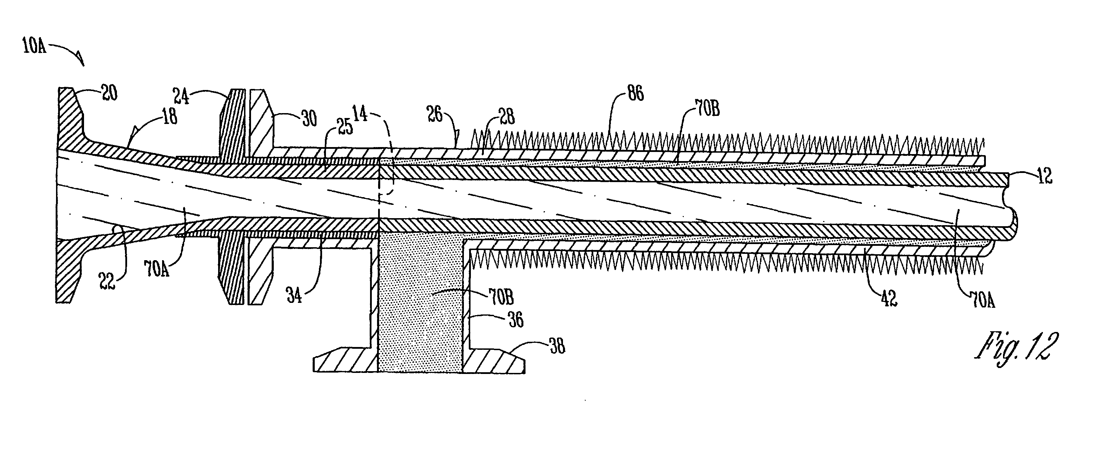

The strand 80 coated with a layer of the meat emulsion 82 is then coated with a layer of collagen material 72 which is moved from the second passageway 62 through channel 83 (Fig. 11) onto the layer 82 as the layer 82 and inner strand 80 pass underneath the flanges 74 on the discharge end of tube 54. With reference to Fig. 10, the resulting product 84 is comprised of the inner strand 80 with a thin layer of meat emulsion 82 on the outer surface thereof, and finally, with a thin layer of collagen 72 on the outer surface of the layer 82.

Again, as previously described, the layer 82 of low pressure meat emulsion moving through channel 78 decreases if not eliminates the smearing action that might otherwise take place as the layer 82 is formed. The expansion of the strand 80 as it leaves the discharge end 16 of restrictor tube 12 also enhances the surfacing of the salt soluble proteins in the strand. This activity causes the salt soluble protein to move to the layer 82 to help the cohesiveness of the finished product.

Since meat smearing occurs when the meat is allowed to expand violently from a high pressure to a lower pressure, the apparatus of this invention avoids such rapid expansion. The meat emulsion 70B is "trapped" between the wall of coupling 46 and tube 12, as well as the meat coming from pipe 12. Thus, the meat emulsion 70B cannot expand uncontrollably and very little smear occurs, if at all. Lower pressure of the layer 70B avoids violent expansion and contributes to reduced smear.

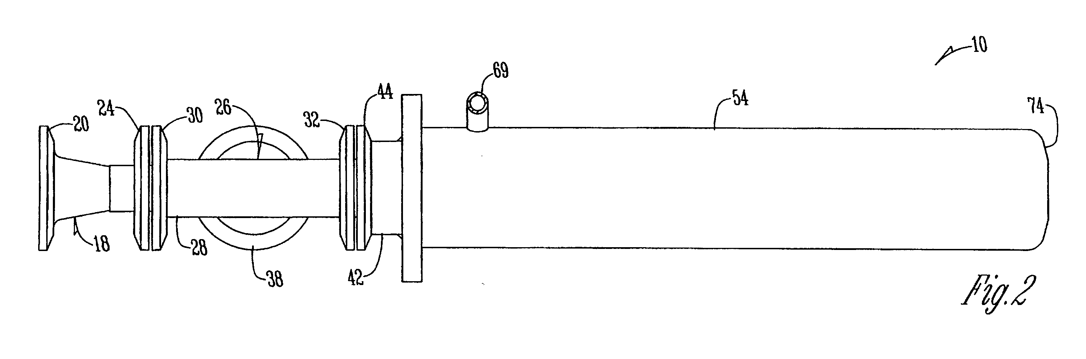

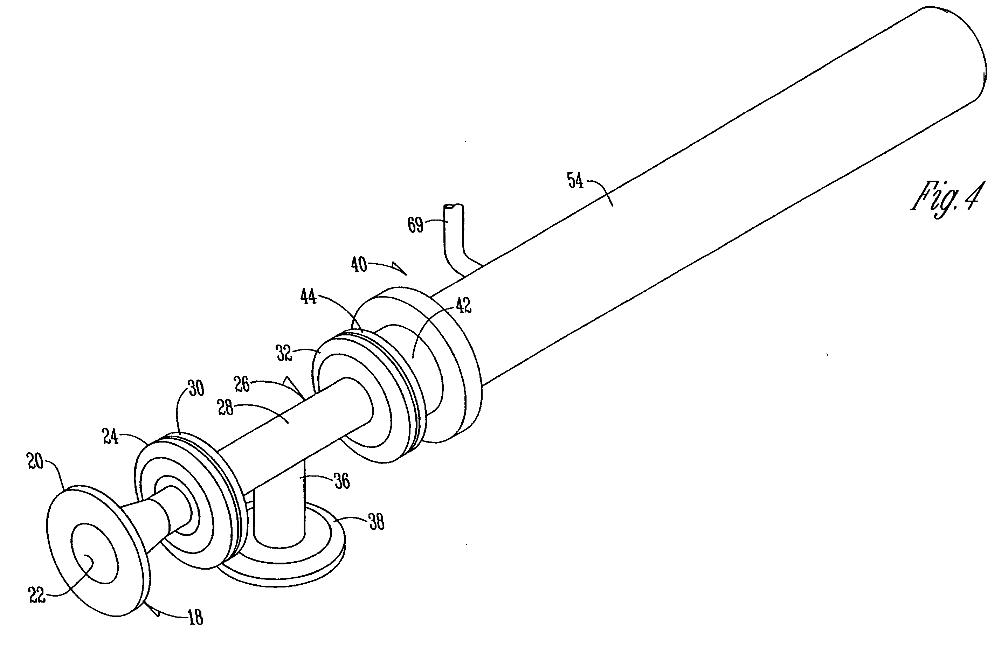

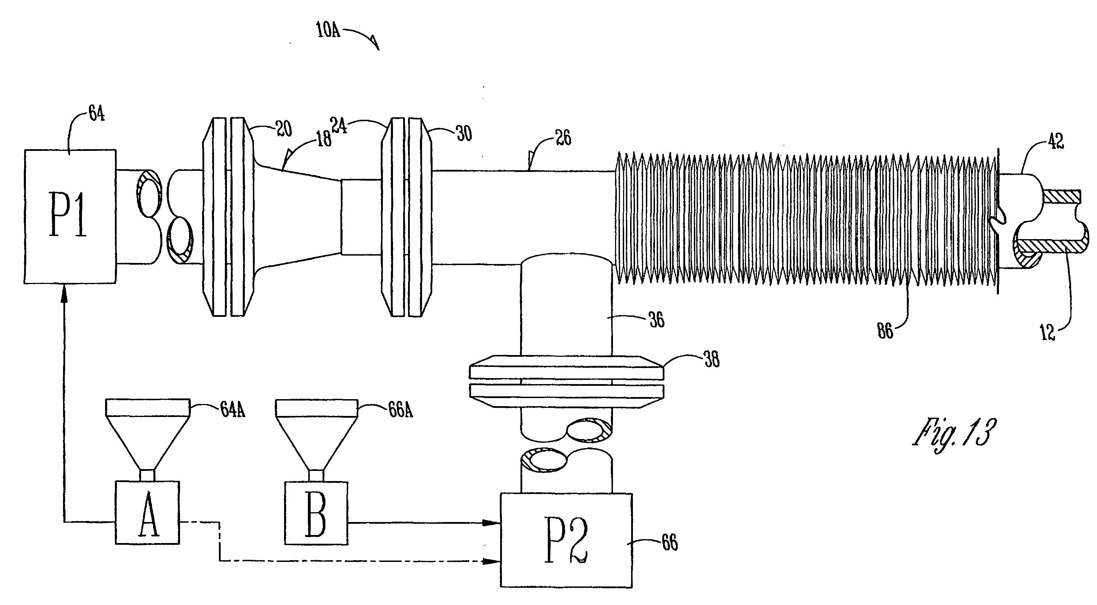

An alternate form of the invention is shown in Figs. 12-14. Much of the structure of Figs. 12-14 is identical or similar to corresponding structure in Figs. 1-11, and like numerals for such similar structure have been used in Figs. 1-14.

The alternate extrusion attachment 10A in Figs. 12-14 eliminate the outer tube 54 and mounting collar 56, of the preferred embodiment, as well as the passageway 62 and tube 69. In lieu thereof, an elongated casing 86 comprised of collagen, cellulose or natural casing material is placed on the outer surface of tube 42. As seen in Fig. 14, the casing 86 is filled by meat emulsion 70A and 82 (70B) to form strand 80A. Tube 42 functions as a conventional stuffing horn insofar as casing 86 is concerned.

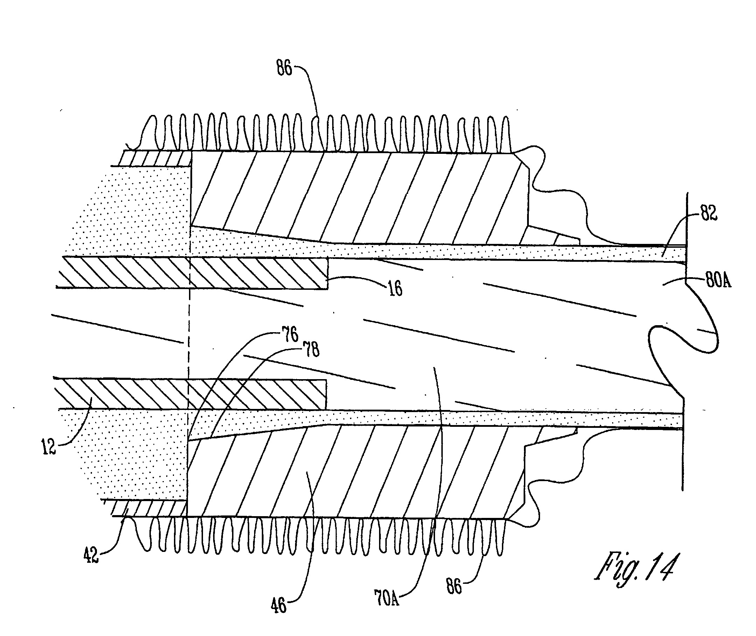

Fig. 13 shows sources of meat emulsion 64A and 66A which are connected to pumps 64 and 66, respectfully. As indicated by the arrows in Fig. 13, the material flowing to pumps 64 and 66 can be from one source or both, and can involve the same combinations and conditions of the material supplied to pump 64 and 66 of the primary embodiment.

From the foregoing, it is seen that this invention will achieve at least all of its stated objectives.

## Claims

1. An extrusion attachment (10, 10A) for sausage making machines the attachment (10, 10A) including an inner hollow elongated restrictor tube (12) having an intake (14) and a discharge end (16), and having a fixed diameter, an inlet coupling (18) secured to the intake end (14) of said restrictor tube (12) and having a bore therein of a greater diameter than the fixed diameter of said restrictor tube (12) and being in communication therewith, an outlet port coupling (46) on the discharge end (16) of said restrictor tube (12) and having a bore therein with a diameter greater than the diameter of said restrictor tube, **characterized by**, a second tube (42) concentrically mounted around said restrictor tube (12) and having an inner diameter spaced from an outer diameter of said restrictor tube (12) to create a first passageway (60) therebetween, a hollow elongated casing (86) concentrically mounted around said second tube (42), and adapted to receive meat emulsion from said restrictor tube (12) and said first passageway (60), said inlet coupling (18) and said second tube (42) being connectable to a source (64, 66) of meat emulsion under pressure, said first passageway (60) being of sufficient size that meat emulsion (70A) moving therein will maintain a meat emulsion pressure substantially the same as the pressure from said meat emulsion source (64, 66) and less than the meat emulsion pressure in said restrictor tube (12), said second tube (42) having a narrowed discharge channel (78) surrounding the discharge end (16) of said restrictor tube (12) whereby meat emulsion (70B) exiting the second tube (42) will provide a thin layer of meat emulsion (70B) around the surface of meat emulsion (70A) exiting said restrictor tube (12).

2. The device of claim 1 wherein said inlet coupling (18) and said second tube (42) are connectable to the same source (64) of meat under pressure.

3. The device of claim 1 wherein said inlet coupling (18) and said second tube (42) are connectable to a different source (64, 66) of meat under pressure.

4. The device of claim 1 wherein tube stabilizer elements (48, 50) are located around said restrictor tube (12) and engaging the inner diameter of the second tube (42) to support said restrictor tube (12) within said second tube (42) and to maintain the restrictor tube (12) and said second tube (42) in concentric relationship.

5. The device of claim 1 wherein said casing (86) is comprised of one of the following materials: cellulose, collagen, or natural casings.

6. The device of claim 1 wherein a third tube (54) concentrically mounted around said second tube (42) and having an inner diameter spaced from the outer diameter of said second tube (42) to create a second passageway (62) therebetween.

7. The device of claim 6 wherein a shearing edge (76) is located adjacent the discharge channel (78) on said second tube (42) to facilitate the compression of meat particles in meat emulsion (70B) passing through said channel (78).

8. The device of claim 6 wherein tube stabilizer elements (48, 50) are located around said restrictor tube (12) and engaging the inner diameter of the second tube (42) to support said restrictor tube (12) within said second tube (42) and to maintain the restrictor tube (12) and said second tube (42) in concentric relationship.

9. A method of manufacturing a sausage product including extruding a strand (80) of meat emulsion (70A) through an elongated restrictor tube (12) at a high first pressure, **characterized by**, coextruding a first layer (82) of meat emulsion (70B) through a second tube (42) at a lower second pressure which is lower than said first pressure, with said second tube (42) being concentrically positioned and in a spaced position with respect to said restrictor tube (12) so that said first layer (82) is deposited on said strand (80) of meat emulsion (70A).

10. The method of claim 9 wherein said first layer (82) is deposited on said sausage strand (80) in a common space wherein the first layer (82) and the sausage strand (80) are subjected to a lower pressure than said high first pressure, wherein the material in said sausage strand (80) can expand within said space.

11. The method of claim 9 wherein a collagen material layer (72) is deposited on said first layer.

12. The method of claim 9 wherein meat particles in said first layer (82) are compressed before said first layer (82) is deposited on said strand (80).

13. The method of claim 9 wherein said first pressure is approximately 200 psi (13,8 bar) and said second pressure is approximately 60 psi (4,1 bar).

14. The method of claim 9 wherein said first pressure is at least double that of said second pressure.

15. The method of claim 9 wherein said first pressure is at least triple that of said second pressure.

16. The method of claim 9 wherein said first layer (82) is deposited on said sausage strand (80) in a common restricted space wherein the first layer (82) and the sausage strand (80) are subjected to a lower pressure than said high first pressure, wherein rapid expansion of said first layer (82) is diminished to reduce smearing of said sausage strand.

17. The method of claim 9, further **characterized by**, depositing said strand (80) within an elongated hollow casing material (86) on said second tube (42).

## Patentansprüche

1. Extrudiervorsatzgerät (10, 10A) für Wurstherstellungsmaschinen, wobei das Extrudiervorsatzgerät (10, 10A) Folgendes aufweist:
- ein inneres, hohles, langgestrecktes Drosselrohr (12) mit einem Einlassende (14) und einem Auslassende (16) sowie einem festen Durchmesser,
- ein am Einlassende (14) des genannten Drosselrohrs (12) befestigtes Eingangskupplungsstück (18), das eine Bohrung mit einem Durchmesser aufweist, der größer als der feste Durchmesser des genannten Drosselrohrs (12) ist, und das mit dem Drosselrohr in Verbindung steht,
- ein am Auslassende (16) des genannten Drosselrohrs (12) angeordnetes Auslasskupplungsstück (46), das eine Bohrung mit einem Durchmesser aufweist, der größer als der Durchmesser des genannten Drosselrohrs (12) ist,
**dadurch gekennzeichnet, dass**
- ein zweites Rohr (42) konzentrisch um das genannte Drosselrohr (12) befestigt ist und einen Innendurchmesser aulweist, der einen Abstand von einem Außendurchmesser des genannten Drosselrohrs (12) hat, um dazwischen einen ersten Durchgangsweg (60) zu schaffen,
- ein hohles, langgestrecktes Gehäuse (86) konzentrisch um das genannte zweite Rohr (42) befestigt und derart ausgebildet ist, dass es eine Fleischemulsion vom genannten Drosselrohr (12) und vom genannten ersten Durchgangsweg aufnimmt,
- das genannte Eingangskupplungsstück (18) und das genannte zweite Rohr (42) mit einer Quelle (64, 66) von unter Druck stehender Fleischemulsion verbindbar ist,
- der genannte erste Durchgangsweg (60) eine derartig ausreichende Größe hat, dass die sich in diesem Durchgangsweg bewegende Fleischemulsion (70A) einen Fleischemulsionsdruck aufrecht erhält, der im Wesentlichen gleich dem der genannten Fleischemulsionsquelle (64, 66) und geringer als der Fleischemulsionsdruck im genannten Drosselrohr (12) ist,
- das genannte zweite Rohr (42) einen verengten Auslasskanal (78) hat, der das Auslassende (16) des genannten Drosselrohrs (12) umgibt, wobei die das zweite Rohr (42) erregende Fleischemulsion (70B) eine dünne Schicht von Fleischemulsion (70B) um die Oberfläche derjenigen Fleischemulsion erzeugt, die das genannte Drosselrohr (12) erregt.

2. Vorrichtung nach Anspruch 1,
**dadurch gekennzeichnet,**
**dass** das genannte Eingangskupplungsstück (18) und das genannte zweite Rohr (42) mit derselben Quelle (64) des unter Druck stehenden Fleisches verbindbar sind.

3. Vorrichtung nach Anspruch 1,
**dadurch gekennzeichnet,**
**dass** das genannte Eingangskupplungsstück (18) und das genannte zweite Rohr (42) mit einer verschiedenen Quelle (64, 66) des unter Druck stehenden Fleisches verbindbar sind.

4. Vorrichtung nach Anspruch 1,
**dadurch gekennzeichnet,**
**dass** Rohrstabilisierungselemente (48, 50) um das genannte Drosselrohr (12) angeordnet sind und mit dem Innendurchmesser des zweiten Rohrs (42) im Eingriff stehen, damit das genannte Drosselrohr (12) im genannten zweiten Rohr (42) gestützt wird und das Drosselrohr (12) und das genannte zweite Rohr (42) in konzentrischer Beziehung miteinander gehalten werden.

5. Vorrichtung nach Anspruch 1,
**dadurch gekennzeichnet,**
**dass** das genannte Gehäuse (86) aus einem der folgenden Materialien besteht: Zellulose, Kollagen oder natürlichen Gehäusen.

6. Vorrichtung nach Anspruch 1,
**dadurch gekennzeichnet,**
**dass** ein drittes Rohr (54) um das genannte zweite Rohr (42) konzentrisch befestigt ist und einen Innendurchmesser aufweist, der einen Abstand vom Außendurchmesser des genannten zweiten Rohrs (42) aufweist, damit dazwischen ein zweiter Durchgangsweg (62) geschaffen wird.

7. Vorrichtung nach Anspruch 6,
**dadurch gekennzeichnet,**
**dass** eine Scherkante (76) an den Auslasskanal (78) auf dem genannten zweiten' Rohr (42) angrenzt, um das Zusammendrücken der Fleischpartikel in der durch den genannten Kanal (78) durchlaufenden Fleischemulsion zu erleichtern.

8. Vorrichtung nach Anspruch 6,
**dadurch gekennzeichnet,**
**dass** die Rohrstabilisierungselemente (48, 50) um das genannte Drosselrohr (12) angeordnet sind und im Eingriff mit dem Innendurchmesser des zweiten Rohrs (42) stehen, um das genannte Drosselrohr (12) in dem genannten zweiten Rohr zu stützen und das Drosselrohr (12) und das genannte zweite Rohr (42) in konzentrischer Beziehung miteinander zu halten.

9. Verfahren zur Herstellung eines Wurstprodukts, wobei ein Strang (80) aus Fleischemulsion durch ein langgestrecktes Drosselrohr (12) mit einem hohen ersten Drück extrudiert wird,
**dadurch gekennzeichnet,**
**dass** eine erste Schicht (82) aus Fleischemulsion (70B) durch ein zweites Rohr (42) mit einem niedrigeren zweiten Druck, der niedriger als der genannte erste Druck ist, koextrudiert wird, wobei das genannte zweite Rohr (42) konzentrisch um das genannte Drosselrohr (12) und mit Abstand zu diesem angeordnet ist, so dass die genannte erste Schicht (82) auf dem genannten Strang (80) aus Fleischemulsion (70A) abgelagert wird.

10. Verfahren nach Anspruch 9,
**dadurch gekennzeichnet,**
**dass** die genannte erste Schicht (82) auf dem genannten Wurststrang (80) in einem gemeinsamen Raum abgelagert wird, wobei die erste Schicht (82) und der Wurststrang (80) einem tieferen Druck als der genannte hohe erste Druck ausgesetzt werden und wobei sich das Material im genannten Wurststrang (80) im genannten Raum ausdehnen kann.

11. Verfahren nach Anspruch 9,
**dadurch gekennzeichnet,**
**dass** eine Schicht (72) aus Kollagenmaterial auf der genannten ersten Schicht abgelagert wird.

12. Verfahren nach Anspruch 9,
**dadurch gekennzeichnet,**
**dass** die Fleischpartikel in der genannten ersten Schicht (82) zusammengedrückt werden, bevor die genannte erste Schicht (82) auf dem genannten Strang (80) abgelagert wird.

13. Verfahren nach Anspruch 9,
**dadurch gekennzeichnet,**
**dass** der genannte erste Druck etwa 200 psi (13, 8 bar) und der genannte zweite Druck etwa 60 psi (4,1 bar) beträgt.

14. Verfahren nach Anspruch 9,
**dadurch gekennzeichnet,**
**dass** der genannte erste Druck mindestens doppelt so hoch wie der genannte zweite Druck ist.

15. Verfahren nach Anspruch 9,
**dadurch gekennzeichnet,**
**dass** der genannte erste Druck mindestens dreimal so hoch wie der genannte zweite Druck ist.

16. Verfahren nach Anspruch 9,
**dadurch gekennzeichnet,**
**dass** die genannte erste Schicht (82) auf dem genannten Wurststrang (80) in einem gemeinsamen Drosselraum abgelagert wird, wobei die erste Schicht (82) und der Wurststrang (80) einem niedrigeren Druck als der genannte hohe erste Druck ausgesetzt werden und wobei eine schnelle Ausdehnung der genannten ersten Schicht (82) vermindert wird, um ein Verschmieren des genannten Wurststrangs zu verringern.

17. Verfahren nach Anspruch 9,
**dadurch gekennzeichnet,**
**dass** der genannte Strang (80) in einem Material eines langgestreckten, hohlen Gehäuses (86) auf dem genannten zweiten Rohr (42) abgelagert wird.

## Revendications

1. Un accessoire d'extrusion (10, 10A) pour machines à fabriquer les saucisses, l'accessoire (10, 10A) incluant un tube étrangleur allongé creux interne (12) ayant une extrémité d'entrée (14) et de sortie (16), et ayant un diamètre fixe, un raccord d'admission (18) fixé à l'extrémité d'entrée (14) dudit tube étrangleur (12) et ayant un alésage dedans d'un diamètre supérieur au diamètre fixe dudit tube étrangleur (12) et étant en communication avec celui-ci, un raccord d'orifice d'écoulement (46) sur l'extrémité de sortie (16) dudit tube étrangleur (12) et ayant un alésage dedans d'un diamètre supérieur au diamètre dudit tube étrangleur, **caractérisé par** un second tube (42) monté de manière concentrique autour dudit tube étrangleur (12) et ayant un diamètre intérieur espacé d'un diamètre extérieur dudit tube étrangleur (12) pour créer un premier passage (60) entre ceux-ci, un boyau allongé creux (86) monté de manière concentrique autour dudit second tube (42), et adapté pour recevoir une émulsion de viande dudit tube étrangleur (12) et dudit premier passage (60), ledit raccord d'admission (18) et ledit second tube (42) pouvant être connectés à une source (64, 66) d'émulsion de viande sous pression, ledit premier passage (60) étant d'une taille suffisante pour que l'émulsion de viande (70A) se déplaçant à l'intérieur maintienne une pression d'émulsion de viande sensiblement identique à la pression émanant de ladite source d'émulsion de viande (64, 66) et inférieure à la pression d'émulsion de viande dans ledit tube étrangleur (12), ledit second tube (42) ayant un canal de sortie rétréci (78) entourant l'extrémité de sortie (16) dudit tube étrangleur (12), de sorte que l'émulsion de viande (70B) sortant du second tube (42) délivre une fine couche d'émulsion de viande (70B) autour de la surface de l'émulsion de viande (70A) sortant dudit tube étrangleur (12).

2. Dispositif selon la revendication 1, dans lequel ledit raccord d'admission (18) et ledit second tube (42) peuvent être connectés à la même source (64) de viande sous pression.

3. Dispositif selon la revendication 1, dans lequel ledit raccord d'admission (18) et ledit second tube (42) peuvent être connectés à une source différente (64, 66) de viande sous pression.

4. Dispositif selon la revendication 1, dans lequel des éléments stabilisateurs de tube (48, 50) sont positionnés autour dudit tube étrangleur (12) et engagent le diamètre intérieur du second tube (42) afin de soutenir ledit tube étrangleur (12) à l'intérieur dudit second tube (42) et de maintenir le tube étrangleur (12) et ledit second tube (42) en relation concentrique.

5. Dispositif selon la revendication 1, dans lequel ledit boyau (86) est composé d'un des matériaux suivants : cellulose, collagène ou boyau naturel.

6. Dispositif selon la revendication 1, dans lequel un troisième tube (54) est monté de manière concentrique autour dudit second tube (42) et a un diamètre intérieur espacé du diamètre extérieur dudit second tube (42) pour créer un second passage (62) entre ceux-ci.

7. Dispositif selon la revendication 6, dans lequel un bord cisaillant (54) est positionné de manière contiguë au canal de sortie (78) sur ledit second tube (42) pour faciliter la compression des particules de viande dans l'émulsion de viande (70B) passant par ledit canal (78).

8. Dispositif selon la revendication 6, dans lequel des éléments stabilisateurs de tube (48, 50) sont positionnés autour dudit tube étrangleur (12) et engagent le diamètre intérieur du second tube (42) afin de soutenir ledit tube étrangleur (12) à l'intérieur dudit second tube (42) et de maintenir le tube étrangleur (12) et ledit second tube (42) en relation concentrique .

9. Procédé de fabrication d'un produit de saucisse incluant l'extrusion d'un boudin (80) d'émulsion de viande (70A) à travers un tube étrangleur allongé (12) à une première haute pression, **caractérisé par** la coextrusion d'une première couche (82) d'émulsion de viande (70B) à travers un second tube (42) à une seconde pression plus basse qui est inférieure à ladite première pression, ledit second tube (42) étant positionné de manière concentrique et dans une position espacée par rapport audit tube étrangleur (12), de sorte que ladite première couche (82) est déposée sur ledit boudin (80) d'émulsion de viande (70A).

10. Procédé selon la revendication 9, dans lequel ladite première couche (82) est déposée sur ledit boudin de saucisse (80) dans un espace commun dans lequel la première couche (82) et le boudin de saucisse (80) sont soumis à une pression inférieure à ladite première haute pression, dans lequel le matériau dans ledit boudin de saucisse (80) peut se dilater à l'intérieur dudit espace.

11. Procédé selon la revendication 9, dans lequel une couche de matériau en collagène (72) est déposée sur ladite première couche.

12. Procédé selon la revendication 9, dans lequel des particules de viande dans ladite première couche (82) sont comprimées avant le dépôt de ladite première couche (82) sur ledit boudin (80).

13. Procédé selon la revendication 9, dans lequel ladite première pression est de 200 psi (13,8 bars) environ et ladite seconde pression est de 60 psi (4,1 bars) environ.

14. Procédé selon la revendication 9, dans lequel ladite première pression fait au moins le double de ladite seconde pression.

15. Procédé selon la revendication 9, dans lequel ladite première pression fait au moins le triple de ladite seconde pression.

16. Procédé selon la revendication 9, dans lequel ladite première couche (82) est déposée sur ledit boudin de saucisse (80) dans un espace étranglé commun dans lequel la première couche (82) et le boudin de saucisse (80) sont soumis à une pression inférieure à ladite première haute pression, dans lequel la dilatation rapide de ladite première couche (82) est diminuée pour réduire l'étalement dudit boudin de saucisse.

17. Procédé selon la revendication 9, **caractérisé en outre par** le dépôt dudit boudin (80) à l'intérieur d'un matériau en boyau creux allongé (86) sur ledit second tube (42).
